Europäisches Patentamt

European Patent Office

Office européen des brevets

(11) Veröffentlichungsnummer: **0 205 666**
**A1**

# EUROPÄISCHE PATENTANMELDUNG

(21) Anmeldenummer: 85200919.0

(22) Anmeldetag: 12.06.85

(51) Int. Cl.⁴: **F 16 K 27/02, F 16 K 1/22**

(43) Veröffentlichungstag der Anmeldung: 30.12.86
**Patentblatt 86/52**

(84) Benannte Vertragsstaaten: **AT BE CH DE FR GB IT LI LU NL SE**

(71) Anmelder: **KROHNE MESSTECHNIK GMBH & CO. KG, Ludwig-Krohne-Strasse 5, D-4100 Duisburg 1 (DE)**

(72) Erfinder: **Bittner, Franz, Platanenstrasse 11, D-4130 Moers (DE)**
Erfinder: **Rademacher-Dubbick, Kristian, Waldsteige 14, D-4100 Duisburg 1 (DE)**
Erfinder: **Rotthaus, Dirk, Dr.-Ing., In der Uhlenflucht 3, D-4630 Bochum (DE)**
Erfinder: **Stannek, Wolfgang, Prof. Dr., Harnischstrasse 10, D-3000 Hannover (DE)**
Erfinder: **Stevens, Udo, Reinhardtstrasse 6, D-4130 Moers 1 (DE)**

(74) Vertreter: **Ackmann, Günther, Dr.-Ing., Claubergstrasse 24 Postfach 10 09 22, D-4100 Duisburg 1 (DE)**

(54) **Absperr- und Regelorgan mit einer Verschlussklappe.**

(57) Ein Absperr- und Regelorgan für Rohrleitungen besteht aus einem rohrförmigen Gehäuse (1) und einer Verschlußklappe (5), die mit einem in einer Gehäusebohrung abdichtend gelagerten Drehzapfen (10) und einem diametral gegenüberliegenden Drucklager (6) versehen ist. Um dieses auch für heiße und aggressive Medien einsetzen zu können, ist in dem Gehäuse (1) ein zylinderförmiger Keramikkörper (3) mit einer aus einem keramischen Werkstoff bestehenden Verschlußklappe (5) angeordnet und ein aus keramischem Werkstoff bestehender Drehzapfen (10) an ein keramisches Drehteil (15) angekoppelt, das mit einer plangeschliffenen, geläppten und bedarfsweise polierten Stirnfläche (16) gegen eine am Außenmantel des Keramikkörpers (3) angebrachte, ebenfalls plangeschliffene, geläppte und bedarfsweise polierte Gleitfläche (14) dicht anliegt, von einer Anpreßfeder (26) beaufschlagt wird und an eine Drehwelle (21) angeschlossen ist.

Für eine ergänzende Abdichtung ist am Außenrand der Gleitfläche (14) ein von einer Druckhülse (33) beaufschlagter Dichtungsring (32) angeordnet. Die Drehwelle (21) wird von Tellerfedern (26) beaufschlagt, die unter Zwischenlage eines Kugellagers (27) zwischen einem im Rohrstutzen (2) verschraubbaren Druckstück (28) um einer Schulter (23) der Drehwelle (21) verspannbar sind.

## Absperr- und Regelorgan mit einer Verschlußklappe

Die Erfindung betrifft ein Absperr- und Regelorgan für Rohrleitungen, welches aus einem rohrförmigen Gehäuse und einer Verschlußklappe besteht, die mit einem in einer Gehäusebohrung abdichtend gelagerten Drehzapfen und einem diametral gegenüberliegenden Drucklager versehen ist.

Mit einer Verschlußklappe ausgerüstete Absperr- und Regelorgane verursachen in der Offenstellung nur geringe Druckverluste und erlauben eine Mengen- und Druckregulierung. Das Gehäuse und die Verschlußklappe bestehen in der Regel aus metallischem Werkstoff oder Kunststoff, während für die Abdichtung des Drehlagers und des Klappensitzes Gummi- oder Kunststoffteile üblich sind. Für aggressive und heiße flüssige oder gasförmige Medien sind Absperrklappen dieser Art jedoch nicht geeignet, weil sowohl die Abdichtungselemente wie auch die metallischen Bauteile zerstört werden. Dies gilt auch für einen auf dem Markt angebotenen Kugelabsperrhahn, bei dem ein kugeliges Hahnküken, Lagerringe für das Küken und Anschlußmuffen aus einem keramischen Werkstoff bestehen, jedoch mit Dichtungsringen aus Kunststoff versehen sind, die vom Medium angegriffen werden. Außerdem ist der Aufbau aus einer Vielzahl keramischer Bauteile in der Herstellung und der Montage umständlich und teuer.

Weiterhin ist zur Eignung für heiße und aggressive Medien in der älteren Patentanmeldung PCT/EP 85/00118 ein keramisches Absperr- und Regelorgan vorgeschlagen worden, bei dem in einem Gehäuse ein zylinderförmiger Keramikkörper angeordnet ist, dessen axiale Durchflußbohrung eine Zwischenwand aufweist und an dessen Außenmantel eine plangeschiffene und geläppte Gleitfläche für einen von einer Anpreßfeder beaufschlagten Drehschieber aus keramischem Werkstoff vorsehen ist, dessen gegen die Gleitfläche anliegende, plangeschliffene und geläppte Stirnfläche wenigstens einen Verbindungskanal aufweist, der über zwei im Keramikkörper neben der Zwischenwand angeordnete, von der Gleitfläche bis zur Durchflußbohrung führenden Querkanälen angeordnet ist. Dieser Drehschieber verursacht jedoch in der Offenstellung einen starken Druckabfall und ist nur für kleine Durchflußmengen geeignet.

Demgegenüber liegt der Erfindung die Aufgabe zugrunde, ein mit einer Verschlußklappe ausgerüstetes Absperr- und Regelorgan unter Verwendung keramischer Bauteile so auszubilden, daß es ohne Zerstörungsgefahr auch für aggressive und heiße Medien eingesetzt werden kann.

Diese Aufgabe wird durch die in dem Kennzeichnungsteil des Anspruchs 1 aufgeführten Merkmale gelöst.

Eine solche Ausbildung hat den Vorteil, daß das durchströmende Medium ausschließlich mit korrosionsbeständigen keramischen Bauteilen in Berührung kommt. Das Absperr- und Regelorgan ist daher auch gegenüber aggressiven und/oder heißen Flüssigkeiten oder Gasen, ebenso auch gegenüber abrasiv wirkenden Medien beständig und für den Einsatz in der chemischen Industrie o. dgl. besonders geeignet. Dies gilt insbesondere auch für die allein aus keramischem Werkstoff bestehenden Bauteile für die primäre Abdichtung des Drehzapfens im Zapfenlager. Die gegen die Gleitfläche des Keramikkörpers anliegende Stirnfläche des Drehteils bewirkt aufgrund der plangeschliffenen, geläppten und bedarfsweise polierten Flächenbearbeitung eine bestmögliche Abdichtung, unterstützt durch Adhäsionskraft, die auch beim Verdrehen der Verschlußklappe aufrechterhalten bleibt. Der Übertragung der Drehkraft dient der ebenfalls aus keramischem Werkstoff bestehende Drehzapfen, der vorzugsweise mit vierkantigen Enden in eine entsprechene Ausnehmung der Verschlußklappe bzw. des Drehteils eingreift.

Um bei dieser Abdichtung auch einen etwaigen Durchtritt kleinster Stoffmengen infolge Grenzflächendiffusion zu verhindern, ist am Außenrand der Gleitfläche des Keramikkörpers und der Stirnfläche des Drehteils zweckmäßig ein von einer Druckhülse beaufschlagter Dichtungsring angeordnet. Durch diese Ausbildung kann das eventuell hindurch diffundierende Medium nur mit den beiden keramischen Bauteilen und dem Dichtungsring in Berührung kommen. Um diesen dicht gegen den Außenrand der Dichtungsflächen zu pressen, kann die Druckhülse mit einer Fase versehen sein, welche den Dichtungsring gegen den Außenrand der Gleitfläche und des Drehteils preßt. Zur Anstellung ist die Drehhülse vorzugsweise von einem mit einem Außengewinde in einem Rohrstutzen des Gehäuses verschraubbaren Spannring beaufschlagt.

Für einen geeigneten Drehantrieb ist das Drehteil mit einem Schlitz versehen, in den ein von einer Drehwelle beaufschlagtes Kupplungsglied eingreift. Dabei ist zweckmäßig das Kupplungsglied mit einem in den Schlitz des Drehschiebers eingreifenden Steg und die Drehwelle mit Mitnehmernasen versehen, welche in entsprechende Ausnehmungen des Kupplungsgliedes eingreifen.

- 4 -

Ein besonders günstiger Anpreßdruck für eine hohe Abdichtung an der Dichtungsfläche läßt sich dadurch erzielen, daß die Drehwelle von Tellerfedern beaufschlagt wird. Diese sind bevorzugt unter Zwischenlage eines Kugellagers zwischen einem mit einem Außengewinde in dem Rohrstutzen des Gehäuses verschraubbaren Druckstück für die Drehwelle und einer Schulter der Drehwelle verspannbar. Der Anpreßdruck läßt sich besonders günstig dadurch übertragen, daß das Kupplungsglied mit einem zentrischen Vorsprung versehen ist, gegen den ein kalottenförmiges Kopfstück der Drehwellen anliegt.

Die Verschlußklappen, deren Drucklager und Dichtungsrand können verschieden ausgebildet sein. So kann beispielsweise das Drucklager aus einem am unteren Rand der Verschlußklappe angeformten kalottenförmigen Ansatz und einer entsprechenden Vertiefung im Innenmantel des Keramikkörpers oder aus einem in eine am unteren Rand der Verschlußklappe vorgesehene Bohrung und in eine Sackbohrung des Keramikkörpers eingesteckten keramischen Zapfen bestehen.

Die für den Drehzapfen vorgesehene Abdichtung kann auch für die Lagerung des Drehzapfens keramischer kugeliger Absperrhähne verwendet werden.

In der Zeichnung sind zwei Ausführungsbeispiele dargestellt. Es zeigen:

Fig. 1    ein Absperr- und Regelorgan mit einer Verschlußklappe in einem Längsschnitt,

Fig. 2    eine weiteres Ausführungsbeispiel mit einer abgewandelten Verschlußklappe in einem Längsschnitt,

Fig. 3    die Verschlußklappe der Ausführung nach Fig. 2 in einer Seitenansicht und

Fig. 4    den Gegenstand der Fig. 3 in einer Draufsicht.

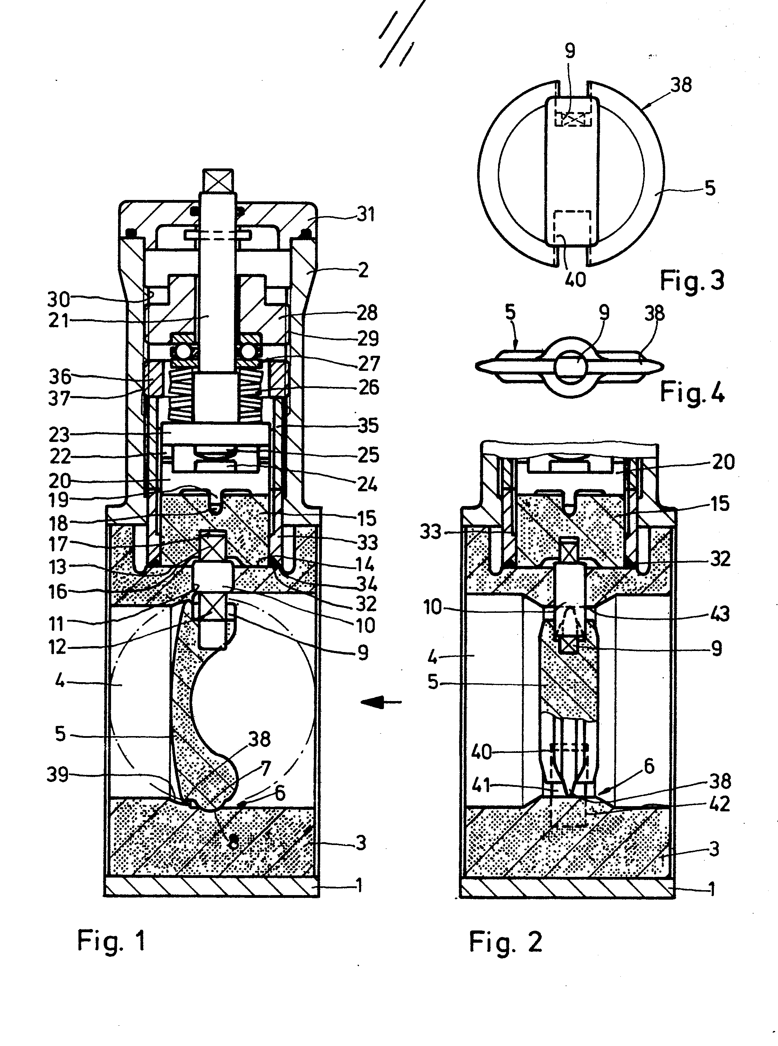

Das in Fig. 1 gezeigte Absperr- und Regelorgan besteht
im wesentlichen aus einem rohrförmigen Gehäuse 1 mit
einem radial angeformten Rohrstutzen 2, einem innerhalb
des Gehäuses 1 angeordneten Keramikkörper 3 mit einer
axialen Durchflußbohrung 4 für das Medium, in der eine
Verschlußklappe 5 aus einem keramischen Werkstoff um
eine von einem Drucklager 6 und einem keramischen Drehzapfen 10 gebildete diametrisch verlaufende Achse ist.
Während das Gehäuse 1 mit dem seitlichen Rohrstutzen 2
aus metallischem Werkstoff oder Kunststoff gefertigt ist,
besteht der Keramikkörper 3, die Verschlußklappe 5, der
Drehzapfen 10 und ein der Abdichtung dienendes Drehteil
15 aus einem hochfesten, dichtgebrannten keramischen
Werkstoff, beispielsweise Oxidkeramik, der gegen aggressive und heiße Medien, wie Säuren o. dgl. widerstandsfähig
und außerdem gut bearbeitbar ist.

Die Verschlußklappe 5 ist mit einem Randwulst 38 versehen,
der in der Schließlage gegen eine kalottenförmige Dichtungsfläche 39 in der axialen Durchflußbohrung 4 anliegt.
Das der drehbaren Abstützung dienende Drucklager 6 besteht
aus einem am unteren Rand der Verschlußklappe 5 angeformten
kalottenförmigen Ansatz 7, und einer entsprechenden
Vertiefung 8 in der Durchflußbohrung 4. Zur oberen Drehlagerung führt der keramische Drehzapfen 10 durch eine
Lagerbohrung 11 und greift mit vierkantig geformten
Enden 12, 13 in entsprechende Ausnehmungen 9, 17 der
Verschlußklappe 5 bzw. des Drehteils 15.

Der Keramikkörper 3 ist an seinem Außenmantel um die
Lagerbohrung 11 herum mit einer Anschliff-Fläche versehen,
welche eine Gleitfläche 14 für das Drehteil 15 bildet.
Diese Gleitfläche 14 ist ebenso wie die anliegende Stirnfläche 16 des Drehteils 15 plangeschiffen, geläppt und
bedarfsweise poliert, so daß diese beiden Bauteile, mit
Unterstützung durch Adhäsionskraft, eine bestmögliche Abdichtung der Drehlagerung bewirken.

Das keramische Drehteil 15 ist mit einem Schlitz 18 versehen, in den der Steg 19 eines Kupplungsgliedes 20 eingreift. Das Kupplungsglied 20 liegt mit einer unteren ringförmigen Schulter auf dem Drehteil 15 auf und wird von einer Drehwelle 21 beaufschlagt, die in dem Rohrstutzen 2 angeordnet ist. Zur Übertragung der Drehbewegung der Drehwelle 21 auf das Kupplungsglied 20 sind am unteren Ende der Drehwelle 21 Mitnehmernasen 22 angeordnet, die in entsprechende Ausnehmungen des Kupplungsgliedes 20 eingreifen. Für die Übertragung eines Anstelldruckes ist das Kupplungsglied 20 mit einem zentrischen Vorsprung 24 versehen, gegen ein kalottenförmiges Kopfstück 25 der Drehwelle 21 anliegt.

Der Anstelldruck wird von einem Satz Tellerfedern 26 erzeugt, die zwischen einer am unteren Ende der Drehwelle 21 vorgesehenen Schulter 23 und einem Kugellager 27 verspannt sind. Das Kugellager 27 liegt gegen ein Druckstück 28 an, das mit einem Außengewinde 29 in einem Innengewinde 30 des Rohrstutzens 2 verschraubbar ist. Das Kugellager 27 verhindert eine Übertragung der Drehbewegung des Druckstücks 28 bei dessen Verschraubung auf die Tellerfedern 26 und die Drehwelle 21. Im Kugellager 27 ist die Drehwelle 21 axial geführt, die durch einen am Rohrstutzen 2 befestigten Deckel 31 ragt und an ein Antriebsorgan angekoppelt ist.

Damit ein Durchtritt kleinster Stoffmengen zwischen der Gleitfläche 14 des Keramikkörpers 3 und der Stirnfläche 16 des Drehteils 15 infolge einer Grenzflächendiffusion verhindert wird, ist am Außenrand dieser Dichtungsflächen ein von einer Druckhülse 33 beaufschlagter Dichtungsring 32, vorzugsweise ein O-Ring, angeordnet. Die Druckhülse 33 ist mit einer Fase 34 versehen, welche den Dichtungsring 32 gegen den Außenrand der beiden Dichtungsflächen preßt. Die Druckhülse 33 ist über eine Spannhülse 35 von einem Spannring 36 beaufschlagt, der an seinem oberen Rand mit einem Außengewinde 37 versehen und ebenso wie das Druckstück 28 im Innengewinde 30 des Rohrstutzens 2 verschraubbar ist. Durch diese Ausbildung kann der Anpreßdruck von dem Drehteil 15 und der Anpreßdruck von der Druckhülse 33 unabhängig voneinander eingestellt werden.

Wenngleich die doppelte Abdichtung des durch die keramischen Bauteile strömenden Mediums nach außen mittels der Dichtungsflächen (Gleitflächen 14 und Stirnfläche 16) und des zusätzlichen Dichtungsrings 32 in der Regel völlig ausreichend ist, kann es zur erhöhten Sicherung bei einer Anwendung für giftige Medien o. dgl. zweckmäßig sein, zwischen der Druckhülse 33 und dem Außenmantel des Drehteils 15 und/oder Kupplungsgliedes 20 und bedarfsweise auch dem Innenmantel des Rohrstutzens 2 und zwischen dem Außenmantel des Keramikkörpers 3 und dem rohrförmigen Gehäuse 1 ein oder mehrere Dichtungsringe anzuordnen (in der Zeichnung nicht dargestellt).

Bei der in den Fig. 2 bis 4 gezeigten Ausführung ist lediglich eine etwas anders ausgebildete Verschlußklappe 5 vorgesehen, für welche das Drucklager 6 von einem keramischen Zapfen 41 gebildet wird, der in eine am unteren Rand der Verschlußklappe 5 vorgesehene Bohrung 40 und in eine Sackbohrung 42 in der Durchflußbohrung 4 ragt. Die Mittel zur Abdichtung des Drehzapfens 10 und zur Übertragung eines Drehantriebes sind die gleichen wie sie anhand der Fig. 1 beschrieben sind.

Die Erfindung erstreckt sich auch auf andere Ausführungen der Verschlußklappen, die auch eine Kugelform mit einer der Druchflußbohrung entsprechenden Bohrung aufweisen können (Kugelabsperrhahn).

Bezugszeichenliste

| | | | |
|---|---|---|---|
| 1 | rohrförmiges Gehäuse | | |
| 2 | Rohrstutzen | 36 | Spannring |
| 3 | Keramikkörper | 37 | Außengewinde |
| 4 | axiale Durchflußbohrung | 38 | Randwulst |
| 5 | Verschlußklappe | 39 | Dichtungsfläche |
| 6 | Drucklager | 40 | Bohrung |
| 7 | kalottenförmiger Ansatz | 41 | Zapfen |
| 8 | Vertiefung | 42 | Sackbohrung |
| 9 | Ausnehmung | 43 | Ringschulter |
| 10 | Drehzapfen | | |
| 11 | Lagerbohrung | | |
| 12 | vierkantiges Ende | | |
| 13 | vierkantiges Ende | | |
| 14 | Gleitfläche | | |
| 15 | Drehteil | | |
| 16 | Stirnfläche | | |
| 17 | Ausnehmung | | |
| 18 | Schlitz | | |
| 19 | Steg | | |
| 20 | Kupplungsglied | | |
| 21 | Drehwelle | | |
| 22 | Mitnehmernasen | | |
| 23 | Schulter | | |
| 24 | zentrischer Vorsprung | | |
| 25 | kalottenförmiges Kopfstück | | |
| 26 | Tellerfedern | | |
| 27 | Kugellager | | |
| 28 | Druckstück | | |
| 29 | Außengewinde | | |
| 30 | Innengewinde | | |
| 31 | Deckel | | |
| 32 | Dichtungsring | | |
| 33 | Druckhülse | | |
| 34 | Fase | | |
| 35 | Spannhülse | | |

- 8 -

Patentansprüche

1. Absperr- und Regelorgan für Rohrleitungen, bestehend aus einem rohrförmigen Gehäuse (1) und einer Verschlußklappe (5), die mit einem in einer Gehäusebohrung abdichtend gelagerten Drehzapfen (10) und einem diametral gegenüberliegenden Drucklager (6) versehen ist, dadurch gekennzeichnet, daß in dem Gehäuse (1) ein zylinderförmiger Keramikkörper (3) mit einer aus einem keramischen Werkstoff bestehenden Verschlußklappe (5) angeordnet und ein aus keramischem Werkstoff bestehender Drehzapfen (10) an ein keramisches Drehteil (15) angekoppelt ist, das mit einer plangeschliffenen, geläppten und bedarfsweise polierten Stirnfläche (16) gegen eine am Außenmantel des Keramikkörpers (3) angebrachte, plangeschliffene geläppte und bedarfweise polierte Gleitfläche (14) dicht anliegt, von einer Anpreßfeder (26) beaufschlagt wird und an eine Drehwelle (21) angeschlossen ist.

2. Absperr- und Regelorgan nach Anspruch 1, dadurch gekennzeichnet, daß der keramische Drehzapfen (10) mit vierkantigen Enden (12, 13) in eine entsprechende Ausnehmung (9 bzw. 17) der Verschlußklappe (5) bzw. des Drehteils (15) eingreift.

3. Absperr- und Regelorgan nach Anspruch 1 oder 2, dadurch gekennzeichnet, daß am Außenrand der Gleitfläche (14) des Keramikkörpers (3) und der Stirnfläche (16) des Drehteils (15) ein von einer Druckhülse (35) beaufschlagter Dichtungsring (32) angeordnet ist.

4. Absperr- und Regelorgan nach Anspruch 3, dadurch gekennzeichnet, daß die Druckhülse (33) mit einer Fase (34) gegen den Außenrand der Gleitfläche (14) und der Stirnfläche (16) preßt.

5. Absperr- und Regelorgan nach Abspruch 3 oder 4, dadurch gekennzeichnet, daß die Druckhülse (33) von einem mit einem Außengewinde (30) in einem Rohrstutzen (2) des Gehäuses (1) verschraubbaren Spannring (36) beaufschlagt ist.

6. Absperr- und Regelorgang nach einem der Ansprüche 1 bis 5, dadurch gekennzeichnet, daß das Drehteil (15) mit einem Schlitz (18) versehen ist, in den ein von einer Drehwelle (21) beaufschlagtes Kupplungsglied (20) eingreift.

7. Absperr- und Regelorgan nach Anspruch 6, dadurch gekennzeichnet, daß das Kupplungsglied (20) mit einem in den Schlitz (18) des Drehteils (15) eingreifenden Steg (19) und die Drehwelle (21) mit Mitnehmernasen (22) versehen ist, welche in entsprechende Ausnehmungen des Kupplungsgliedes (20) eingreifen.

8. Absperr- und Regelorgan nach Anspruch 6 oder 7, dadurch gekennzeichnet, daß die Drehwelle (21) von Tellerfedern (26) beaufschlagt wird.

9. Absperr- und Regelorgan nach Anspruch 8, dadurch gekennzeichnet, daß die Tellerfedern (26) unter Zwischenlage eines Kugellagers (27) zwischen einem mit einem Außengewinde (29) und dem Rohrstutzen (2) des Gehäuses (1) verschraubbaren Gleitlager (28) für die Drehwelle (21) und einer Schulter (23) der Drehwelle (21) verspannbar sind.

10. Absperr- und Regelorgan nach Anspruch 9, dadurch gekennzeichnet, daß das Kupplungsglied (20) mit einem zentrischen Vorsprung (24) versehen ist,
gegen den ein kalottenförmiges Kopfstück (25) der
Drehwelle (21) anliegt.

11. Absperr- und Regelorgan nach einem der Ansprüche 1
bis 10, dadurch gekennzeichnete, daß das Drucklager
(6) aus einem am unteren Rand der Verschlußklappe
(5) angeformten kalottenförmigen Ansatz (7) und
einer entsprechenden Vertiefung (8) im Innenmantel
des Keramikkörpers (3) besteht.

12. Absperr- und Regelorgan nach einem der Ansprüche 1
bis 10, dadurch gekennzeichnet, daß das Drucklager
(6) aus einem in eine am unteren Rand der Verschlußklappe (5) vorgesehene Bohrung (40) und in eine
Sackbohrung (42) des Keramikkörpers (3) eingesteckten
keramischen Zapfen (41) besteht.

Fig. 1

Fig. 2

Fig. 3

Fig. 4

0205666

**Europäisches Patentamt**

**EUROPÄISCHER RECHERCHENBERICHT**

Nummer der Anmeldung

EP 85 20 0919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 351 351 (BENTLEY-LEEK) <br> * Figur 1 * | 1,8 | F 16 K 27/02 <br> F 16 K 1/22 |
| | --- | | |
| A | CH-A- 419 757 (AUGUST LEPPER) <br> * Figur 1 * | 1 | |
| | --- | | |
| A | US-A-3 151 837 (BENTLEY-LEEK) <br> * Figur 1 * | 1 | |
| | --- | | |
| A | US-A-4 010 775 (ROBERTS) <br> * Zusammenfassung, Figur 1 * | 1 | |
| | --- | | |
| A | DE-A-2 932 089 (LINDE AG) <br> * Figur 1 * | 1 | |
| | --- | | **RECHERCHIERTE SACHGEBIETE (Int. Cl.4)** |
| A | US-A-2 631 813 (TRATZIK) <br> * Figur 1 * | 1 | |
| | --- | | F 16 K 1/00 |
| A | US-A-3 601 360 (SCARAMUCCI) <br> * Figur 1 * | 11 | F 16 K 27/00 <br> F 16 K 41/00 |
| | --- | | |
| A | US-A-2 719 022 (BLEVANS) <br> * Figur 1 * | 11 | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 24-01-1986 | SCHLABBACH M |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82